# EUROPEAN PATENT SPECIFICATION

(11) **EP 1 058 207 B1**
(45) Date of publication and mention of the grant of the patent: **11.08.2004**
(21) Application number: 00304628.1
(22) Date of filing: 31.05.2000
(51) Int. Cl.: G06K 15/12

(54) **Printing apparatus with photosensitive carrier for electrostatic image**
Druckvorrichtung mit lichtempfindlichem Träger für elektrostatische Bilder
Dispositif d'impression avec un élément porteur d'image électrostatique

(30) Priority: 02.06.1999 JP 15540099
(43) Date of publication of application: 06.12.2000
(73) Proprietor: SEIKO EPSON CORPORATION, Shinjuku-ku, Tokyo 163-0811 (JP)
(72) Inventor: Iida, Kazuhiko, Suwa-shi, Nagano-ken 392-8502 (JP)
(74) Representative: Sturt, Clifford Mark

(56) References cited:
- EP-A- 0 347 358
- EP-A- 0 776 122
- EP-A- 0 810 545

## Description

### BACKGROUND OF THE INVENTION

### 1. Field of the Invention

This invention relates to a printing apparatus such as a laser printer or digital copying machine, and particularly to improvements in a printing apparatus that exposes a photosensitive body to a laser or other light, thereby causing a latent image to be formed on the photosensitive body surface, and transfers that image to paper or other printing medium. The present invention also relates to a pulse generating unit for generating pulse signals for controlling the laser or other light.

### 2. Description of the Related Art

Conventionally, printing apparatuses are known which irradiate a photosensitive drum with laser light, based on image data, cause a toner or other recording material to adhere to the exposed regions, and transfer the recording material to paper. In this type of printing apparatus, the electric potential in the exposed regions on the photosensitive drum, the entire surface whereof is negatively charged, rises to a prescribed value. Thereby, negatively charged toner adheres only to the exposed regions, and does not adhere to the non-exposed regions, whereupon the adhering toner is transferred to the printing medium.

Also known is the art of controlling the energy density of the irradiated laser light in order to vary the amount of toner adhering to the exposed regions (and hence the amount of toner transferred to the paper) in various parts of the exposed region (as in Japanese Patent Application Laid-Open No. HS-64923/1993, for example). In this prior art, when seeking to cause the toner to adhere uniformly to the exposed regions, control is effected so that the energy density of the laser light is constant.

when the energy density of the laser light is made constant, however, a phenomenon occurs (called toner edge effect) whereby, in the areas of an exposed region that are near boundaries (edges) with non-exposed regions, more toner adheres than in other portions of the exposed region. It is believed that this edge effect is caused by energy emitted from the surface of the photosensitive drum due to the irradiation of the laser light becoming greater in the vicinity of the boundary with the non-exposed regions than in other portions.

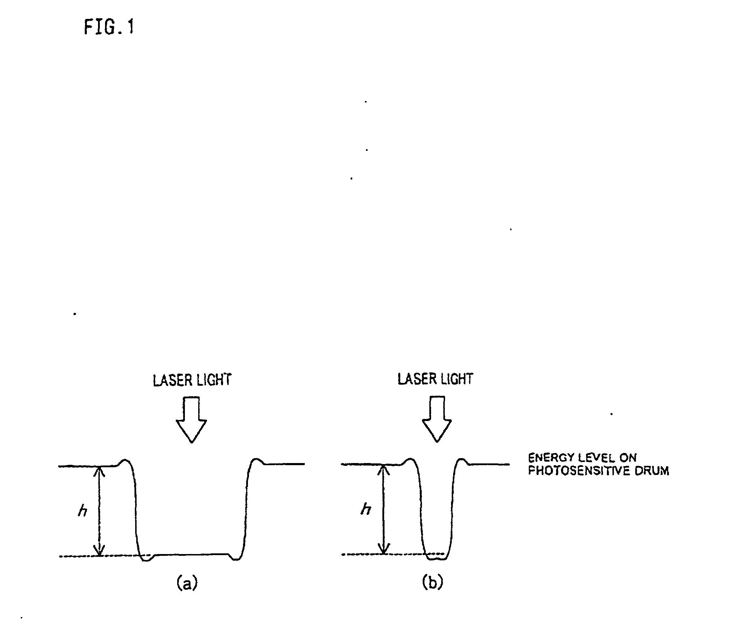

Fig. 1(a) is a graph showing the energy level at each position on the surface of an exposed drum when laser light is irradiated evenly on a comparatively broad area. As is represented in this figure, the energy level on the surface of the exposed drum falls by precisely a prescribed amount ("h" in the figure) due to the laser light irradiation. In the area of the exposed region near the non-exposed region, however, the energy level is lower than in other portions of the exposed region. Accordingly, the electric potential in the vicinity of the boundary with the non-exposed region becomes higher than in other portions of the exposed region, whereupon more toner adheres there.

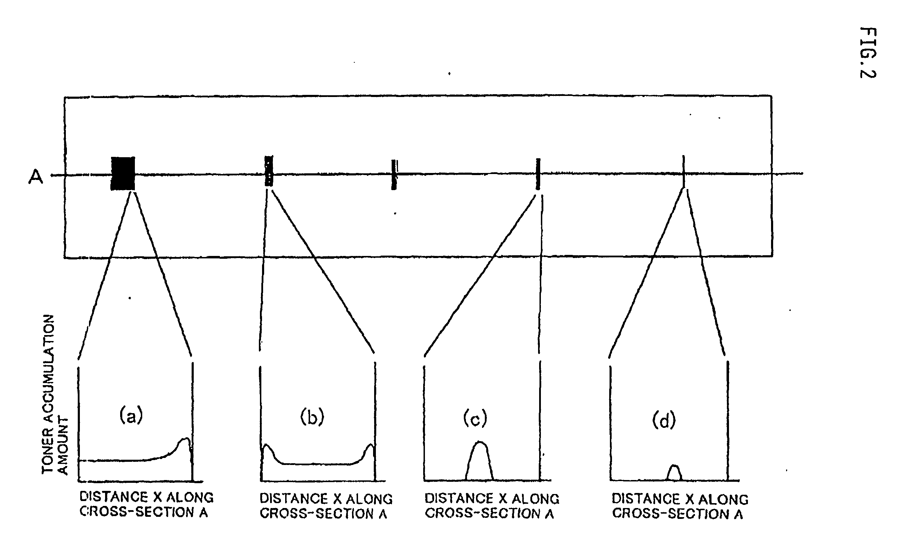

Fig. 2 is a diagram representing the amount of toner accumulation in various positions on the printing surface. As diagrammed in Fig. 2 at (a) and (b), more toner adheres in the vicinity of the boundary with the non-exposed region than in other portions of the exposed region.

For this reason, in a conventional printing apparatus, there is a problem in that toner consumption is greater than necessary. When the area of the portion on the inside of the exposed region is large, as diagrammed in Fig. 2 at (a) and (b), the amount of extra toner used is not so much greater than the necessary toner amount. However, in cases where a comparatively narrow region having a width of 3 to 4 dots or so is exposed, as shown in Fig. 2 at (c), toner consumption can reach approximately double the required amount.

Fig. 1(b) is a graph representing the distribution of energy levels on the surface of the photosensitive drum when the laser light directed onto the photosensitive drum evenly irradiates a comparatively narrow region (of 3 to 4 dots or so). When the width of the exposed region is comparatively narrow, as indicated in this figure, portions having low energy levels at the peripheries of the exposed region are in close proximity to each other. This is thought to be the reason why toner consumption becomes especially great when comparatively narrow regions are evenly irradiated with laser light.

At (d) in Fig. 2 is diagrammed toner accumulation in the case where a region of extremely narrow width is irradiated with laser light, showing how toner accumulation becomes less in such cases.

An object of the present invention is to make it possible to reduce the amount of toner used by making provision so that the amount of toner adhering in the peripheral regions of the exposed region is uniform with the other portions of the exposed region, and so that amount of toner adhering is appropriate, and to make it possible to extend the life of the toner cartridge prior to replacement. Another object is not to adversely affect the printed image quality.

EP 0347358A discloses an electrographic machine, which determines whether a pixel in an image is within an edge area of up to 0.4mm away from an edge. The development vector applied to pixels in an edge area is different to the development vector applied to other pixels.

According to a first aspect of the present invention, there is provided a printing apparatus for causing a recording material to adhere to a printing medium based on image data, said apparatus comprising means arranged for:
sequentially examining each specific pixel in the image data;
calculating data relating to the shortest distance from the specific pixel to a border contour in the image; and
if the specific pixel lies within a predetermined distance from the border contour, performing graduated control of the quantity of the recording material caused to adhere to the printing medium based on how far the specific pixel is within the predetermined distance from the border contour.

Preferably, the shortest distance is calculated by hypothetically drawing a straight line perpendicular to the line configuring the boundary contour from the specific pixel and then finding the distance from the specific pixel to the crossing point of the perpendicular line and the boundary contour.

According to a second aspect of the present invention, there is provided a pulse generating unit for generating pulse signals for driving a printing engine on the basis of image data, comprising:
a positional relationship calculation unit for sequentially examining each specific pixel in the image data and calculating data relating to the shortest distance from the specific pixel to a border contour in the image; and
a pulse controller for controlling an on/off ratio of pulse signals on the basis of the data relating to the shortest distance and, if the specific pixel lies within a predetermined distance from the border contour, performing graduated control of the on/off ratio based on how far the specific pixel is within the predetermined distance from the border contour.

According to a third aspect of the present invention, there is provided a pulse generating method for generating pulse signals for driving a printing engine on the basis of image data, comprising:
positional relationship calculation for sequentially examining each specific pixel in the image data and calculating data relating to the shortest distance from the specific pixel to a border contour in the image; and
pulse controlling for controlling an on/off ratio of pulse signals on the basis of the data relating to the shortest distance and, if the specific pixel lies within a predetermined distance from the border contour, performing graduated control of the on/off ratio based on how far the specific pixel is within the predetermined distance from the border contour.

### BRIEF DESCRIPTION OF THE DRAWINGS

Fig. 1 is a diagram representing energy levels in various positions when a photosensitive body is irradiated evenly with laser light within a certain range, with a case where the range of laser light irradiation is comparatively broad diagrammed in Fig. 1(a), and a case where the irradiation range is comparatively narrow diagrammed in Fig. 1(b);
Fig. 2 is a graph representing toner adhesion amounts in various positions when printed with a conventional laser printer, with cases where the widths of the exposed regions are comparatively broad diagrammed in Fig. 2(a) and Fig. 2(b), a case where the width of the exposed region is comparatively narrow diagrammed in Fig. 2(c), and a case where the width of the exposed region is extremely narrow diagrammed in Fig. 2(d);
Fig. 3 is a block diagram representing the basic configuration of a printing apparatus according to a first embodiment aspect of the present invention;
Fig. 4 is a block diagram specifically of a pulse generator in the printing apparatus noted above, with Fig. 4(a) showing the connection relationships between the overall pulse generator and the other elements, Fig. 4(b) specifically diagramming a temporary memory unit in the pulse generator, and Fig. 4(c) specifically representing the configuration of a positional relationship calculation unit in the pulse generator;
Fig. 5 is a flowchart of procedures for generating pulses in the pulse generator;
Fig. 6 is a diagram for explaining "digital differentiation;"
Fig. 7 is a diagram for explaining the shortest distance R from a boundary contour;
Fig. 8 is a graph representing example characteristics in a pulse modulating circuit; and
Fig. 9 is a graph representing ink adhesion amounts in various positions when printed by the printing apparatus described above, with Fig. 9(a) and 9(b) representing cases where the width of the exposed region is comparatively broad, Fig. 9(c) representing a case where the width of the exposed region is comparatively narrow, and Fig. 9(d) representing a case where the width of the exposed region is extremely narrow.

### DESCRIPTION OF THE PREFERRED EMBODIMENTS

### Overall Configuration

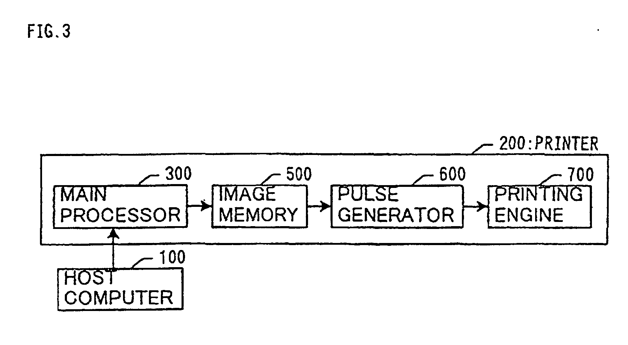

Embodiment aspects of the present invention are described next. Fig. 3 is a block diagram of a laser printer that is a printing apparatus according to a first embodiment aspect of the present invention. As diagrammed in this figure, a laser printer 200 comprises a main processor 300, an image memory 500, a pulse generator 600, and a printing engine 700. This laser printer 200 is connected to a host computer 100. The laser printer 200 is not limited to cases wherein it is connected directly to the host computer 100, but may also be configured so as to receive signals from a computer via a network (not shown).

The main processor 300 processes series of printing commands sent from the host computer 100, generates binary dot image data for forming a printed image, and stores those data in the image memory 500. The image memory 500 is connected to the pulse generator 600.

The pulse generator 600 reads in image data from the image memory 500 by direct memory access (DMA), and generates laser drive pulses for driving an image laser (light emission means) inside the printing engine 700. a laser diode inside the printing engine 700 emits light based on those pulse signals. That laser light is directed onto a photosensitive drum along a scanning direction. Toner or other recording material adheres to the irradiated region, and that is transferred to paper or other printing media.

The pulse generator 600 also constitutes a pulse generating unit according to a second embodiment aspect of the present invention. The pulse generating unit according to the second embodiment aspect has the same configuration and performs the same operations as the pulse generator 600 in the printing apparatus according to the first embodiment aspect. That being so, an overall description is given below of the printing apparatus according to the first embodiment aspect, and no further description is given of the second embodiment aspect.

### Configuration of Pulse Generator 600

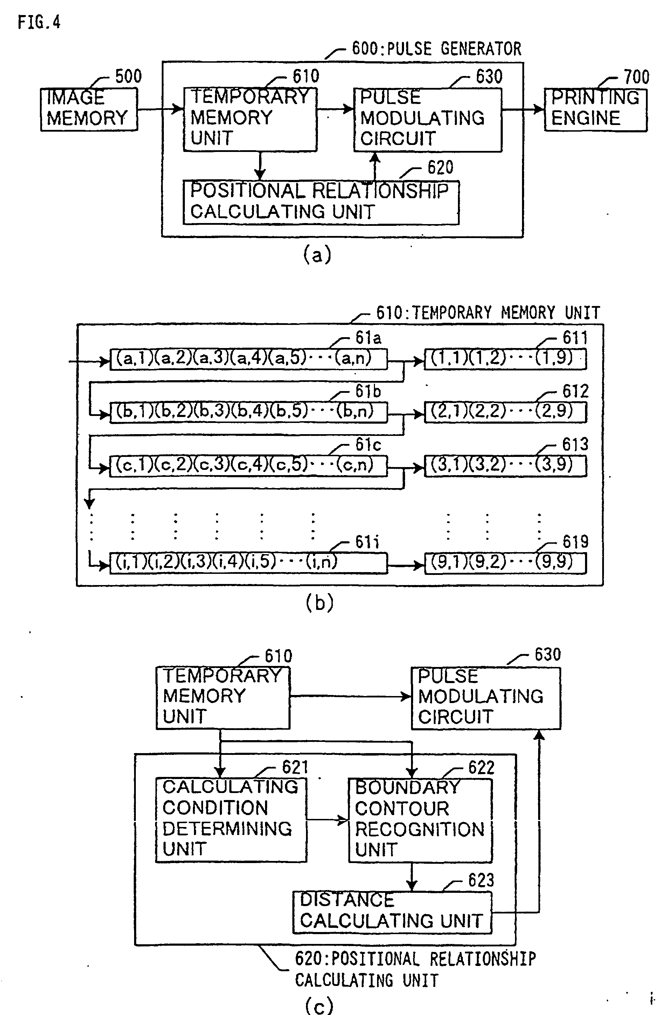

Fig. 4(a) is a block diagram for the pulse generator 600 representing the general features of the configuration thereof. The pulse generator (pulse generating unit) 600 comprises a temporary memory unit 610, a positional relationship calculation unit 620, and a pulse modulating circuit (pulse controller) 630. This is described in greater detail below.

In Fig. 4(b) are diagrammed the details of the temporary memory unit 610. The temporary memory unit 610 comprises a plurality of line memories 61a, 61b, 61c, ..., 61i (totaling 9 units), and a plurality of shift registers 611, 612, 613, ..., 619 (totaling 9 units).

Each of the line memories 61a through 61i can hold one horizontal scanning line of image data. These line memories are connected serially, making it possible to transfer data from a line memory in the previous stage to a line memory in the next stage (from 61a to 61b, for example).

The shift registers 611 through 619 can each hold 9 bits of binary data. Accordingly, the nine shift registers 611 through 619 can hold overall 9 × 9 bits of binary data. The left end of the shift register 611 is connected to the line memory 61a. The left end of the shift register 612 is connected to the line memory 61b. Similarly, thereafter, the left ends of the shift registers 613 through 619 are connected respectively to the line memories 61c through 61i. Thus the shift registers 611 through 619 can sequentially fetch data recorded in the line memories 61a through 61i, respectively, one bit at a time.

In Fig. 4(c) is given a detailed block diagram of the positional relationship calculating unit 620. The positional relationship calculating unit 620 comprises a calculation condition determining unit 621, a boundary contour recognition unit 622, and a distance calculation unit 623. As will be described in detail subsequently, moreover, specific pixel data in the image are sequentially examined, based on data in the temporary memory unit 610, data relating to the positional relationship between those specific pixels and the boundary contour in the image (i.e. the shortest distance R to the boundary contour) are calculated, and those data are output to the pulse modulation circuit 630. By "boundary contour" here is meant the boundary between a "printing region" in the image and a "non-printing region." By "printing region" is meant a region in the image to be printed wherein the recording material is made to adhere to the printing medium, while by "non-printing region" is meant a region in the image to be printed wherein no recording material is made to adhere to the printing medium.

### Operation of Pulse Generator 600

The operation of the pulse generator 600 is described next. First, the movement of data in the temporary memory unit 610 is described. Hereinafter, the description assumes that, as diagrammed in Fig. 4(b), the cells in the line memories 61a through 61i have addresses (a,1) through (i,n), the cells in the shift registers 611 through 619 have addresses (1,1) through (9,9), and each cell can hold one bit of binary data.

In the line memory 61a, binary image data recorded in the image memory 500 are sequentially recorded, synchronized to a clock signal, in the cells having the addresses (a,1), (a,2), etc., along the scanning direction. When image data corresponding to one scanning line are recorded in the line memory 61a, data are read out in the order written. The data at the addresses (a,1), (a,2), etc., are written to the addresses (b,1), (b,2), etc., in the line memory 61b, respectively. In conjunction therewith, to the addresses (a,1), (a,2), etc., in the line memory 61a, are sequentially written the next-stage scanning line image data recorded in the image memory 500.

In this fashion, image data corresponding to 9 continuous scanning lines are recorded in the 9 line memories. Each time one scanning line of data is newly written, all of the.data recorded in the previous-stage line memory will be received into the next-stage line memory.

From these line memories, data are sequentially read out, one bit each from 9 continuous scanning lines simultaneously, synchronized to a clock signal, in the scanning direction from the starting end of each scanning line. The data so read out are sequentially written to the left-end addresses (1,1), (2,1), ..., (9,1) in the shift registers 611, 612, ..., 619. In each shift register, one bit of data at a time is shifted, from the left end to the right end, every time one bit is read in.

Thus, in the shift registers 611 through 619 overall, 9 × 9 bits of image data continuous in the vertical and horizontal will be held, and sequentially shifted in the scanning direction. Data reaching the right ends of the shift registers are sequentially discarded in the next data shift.

As described above, every time one scanning line of data is written to the line memories, the data in each line member are taken over by the next-stage line memory. For that reason, in the shift registers also, data shifted by one scanning line are read in every time data are read in from the starting end to the terminal end of a scanning line.

In this embodiment aspect, 9 × 9 bits of data continuous vertically and horizontally can be held by the shift registers, but the configuration may be made such that a different number of data is held.

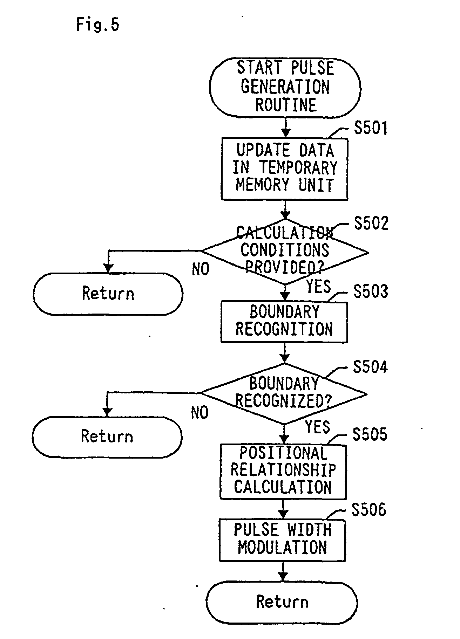

Fig. 5 is a flowchart of the procedures whereby the pulse generator 600 executes pulse generation. The temporary memory unit 610, in synchronization with the clock signal, shifts one dot of data at a time in the scanning direction, as described in the foregoing (S501).

The calculation condition determining unit 621 in the positional relationship calculating unit 620, based on new data in the temporary memory unit 610, determines whether or not conditions for calculating the value of the shortest distance R have been provided (S502). More specifically, of the image data held in the shift registers 611 through 619 in the temporary memory unit 610, data for a prescribed examination point thereafter to be printed are referenced, and a decision is made as to whether that examination point is a point in a printed region. This examination point is positioned roughly in the center of a matrix configured by the cells in the shift registers 611 through 619, being, for example, a point corresponding to the position at the address (5,5). The examination point data are binary data, wherefore, if the examination point data are "1," that is a printed region, and if "0," a non-printing region, for example.

When the examination point is a non-printing region, there will be no irradiation of laser light, and it will therefore be determined that there is no need to calculate the shortest distance R (NO in S502). In that case, the pulse generation routine is skipped, and processing waits for the next data to be recorded at the address (5,5).

When the examination point is a printing region, it is judged to be necessary to calculate the shortest distance R (YES in S502). In that case, the boundary contour recognition unit 722 references the image data held in the shift registers 611 through 619 and recognizes the boundary contour (i.e. the boundary between the printing region and non-printing region) in the image (S503). More specifically, when the printing region data are "1" and the non-printing region data are "0," for example, the data held in every cell in the shift registers are digitally differentiated (as described subsequently) in the vertical and horizontal directions, thereby recognizing the boundaries between "0" regions and "1" regions. It is also permissible, in portions where "0" and "1" data are rapidly alternated to represent gradation, not to recognize the boundaries between the "0" and "1" data as boundary contours.

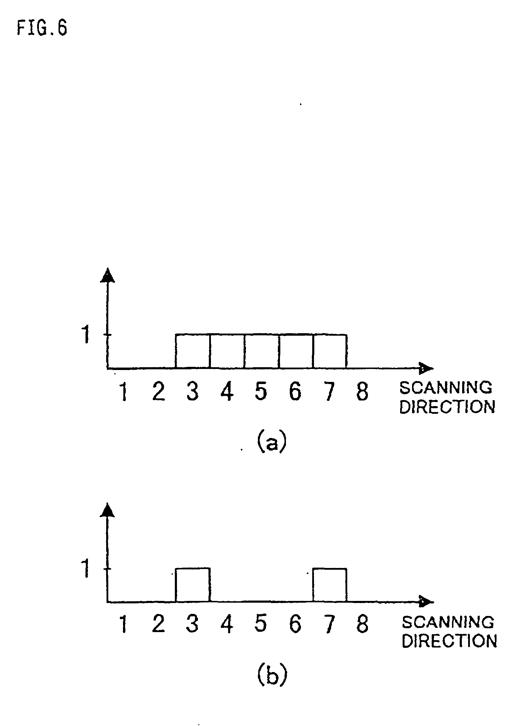

Fig. 6 is a diagram for describing "digital differentiation." A data example is considered wherein "1" dots are continuous from the 3rd through the 7th bit, as diagrammed in Fig. 6(a). When looking at these data in the horizontal direction from the left end (scan start end), at a position where a "1" exists immediately following a "0" (3rd bit), the signal "1" is generated as diagrammed in Fig. 6(b). When a "0" exits immediately following a "1" in Fig. 6(a), in the position where the last "1" exists (7th bit), the signal "1" is generated as diagrammed in Fig. 6(b). This is called "digitally differentiating in the horizontal direction." The foregoing is not a limitation, however, and signals of "1" may be output respectively in the position where the final "0" exists (2nd bit) and in the position where a "1" exists immediately following a "0" (8th bit).

When a boundary contour in an image is recognized (YES in S504), the distance calculation unit 623 calculates the positional relationship between the prescribed examination point (5,5) and the boundary contour described above (S505), and outputs that to the pulse modulation circuit 630.

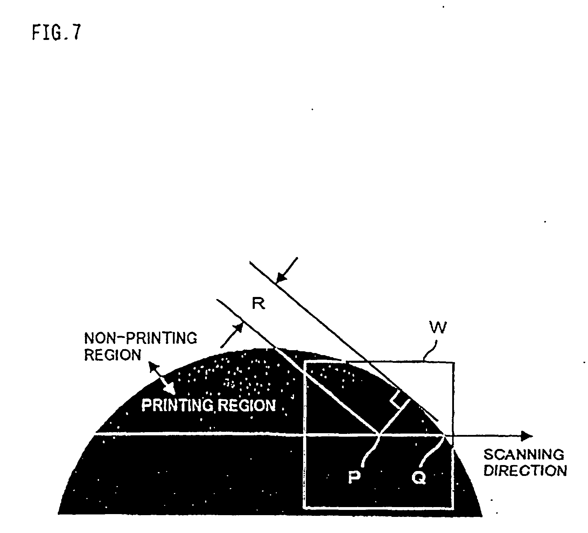

Fig. 7 is a diagram for describing the positional relationship with the boundary contour described earlier. In Fig. 7 is given a model representation of how data for a portion of an image enclosed by the square W are held in the shift registers 611 through 619 and shifted in the scanning direction. The square w contains a printing region portion of the image enclosed by a semicircle and a non-printing region portion outside the semicircle.

Here, when the examination point described earlier is the center point P of the square W, it is preferable that the positional relationship with the boundary contour is the shortest distance R to the boundary contour, rather than the distance PQ to the boundary contour traveling along the scanning direction. The value of the shortest distance R is calculated by hypothetically drawing a straight line perpendicular to the line configuring the boundary contour from the examination point P and then finding the length of that perpendicular line.

When no boundary contour portion whatever is recognized in the boundary contour recognition unit 622 described earlier (NO in S504), the distance calculation unit 623 does not calculate the shortest distance R. That is because the boundary contour portion is outside the range of the image held in the shift registers 611 through 619, and the boundary contour portion is sufficiently removed from the examination point, so that there is no need to lower the energy density of the laser light.

As described in the foregoing, the positional relationship calculating unit 620 calculates data relating to the boundary contour in the boundary contour recognition unit 622, and calculates the distance from that boundary contour in the distance calculation unit 623, but this poses no limitation, and the positional relationship may be calculated by some other method. If, for example, determinations are made as to whether or not data for the pixels surrounding the examination point are printing region, one dot at a time, in the order of nearer distances from the examination point, and the distance between the examination point and the pixel in the non-printing region first attained is calculated, then there will be no need to calculate data relating to the boundary contour.

The pulse modulating circuit (pulse controller) 630 outputs pulse signals for controlling the laser light to the printing engine 700 according to the data (1 or 0) for the examination point (5,5) in the temporary memory unit 610, and according to the value of R when a shortest distance R has been calculated. In particular, the pulse on/off ratio is controlled, based on the positional relationship described earlier, so that the amount of toner adhesion becomes constant inside the printing region.

By on/off ratio is meant the ratio of the pulse sustaining time (pulse width) to the pulse interval. The pulse signal on/off ratio can also be controlled by a method such as pulse density modulation. In this embodiment aspect, however, the on/off ratio is controlled by determining the pulse width by pulse width modulation. By controlling the on/off ratio, the laser light energy density can be controlled. That is, if the on/off ratio is made smaller, the time of laser light irradiation will be shortened, wherefore the energy density will decline, whereas, if the on/off ratio is made larger, the time of laser light irradiation will be lengthened, wherefore the energy density increases. Thus it is possible to conserve the electric field force used to attract the toner to the photosensitive body.

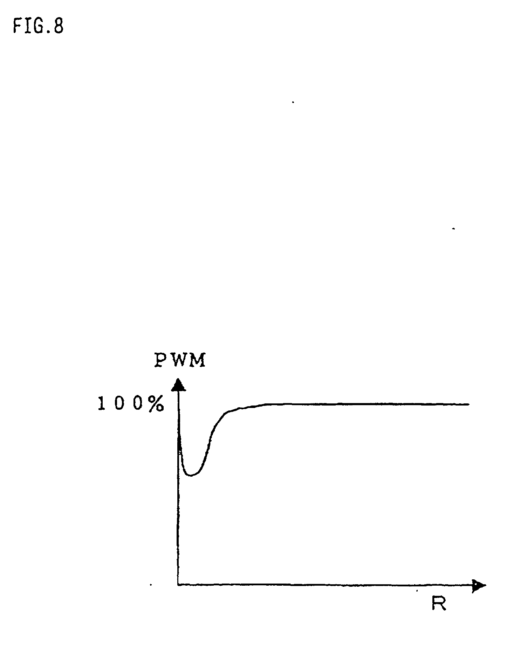

Fig. 8 is an example graph of the characteristics of the pulse modulating circuit 630. In this graph, the shortest distance R from the boundary contour in the image is plotted on the horizontal axis, and the optimum pulse signal on/off ratio for making the toner adhesion amount constant is plotted on the vertical axis. Such a graph is obtained by experience from experimental data relating to the relationship between the toner adhesion amount and pulse signal parameters. Pulse signals are generated, according to a relationship such as is represented in this graph, so that laser light will be output with optimum energy density in each position in the printing region. When so doing, the relationship of values obtained by calculation as the shortest distance R, on the one hand, and pulse signal parameters (on/off ratio, pulse width, and other factors affecting laser light energy density), on the other, may be stored in a memory device such as a ROM (not shown), and pulse width modulation performed on the bases of the data in that memory device.

According to the graph in Fig. 8, in positions sufficiently distant from the boundary contour, an on/off ratio of 100% is considered appropriate. Accordingly, for those positions, 100% laser light irradiation is effected. In other words, no modulation based on the value of the shortest distance R is imposed.

When the distance from the boundary contour falls below a certain length, according to the graph in Fig. 8, the ideal on/off ratio for making the toner adhesion amount constant declines, with an on/off ratio of 60% or so being considered suitable at the lowest point. At positions where 60% is suitable, the pulse width is controlled so that the total pulse width in the pixels corresponding to those positions becomes 60% of the whole.

In portions where the boundary contour is extremely close, according to the graph, the on/off ratio suitable for making the toner adhesion amount constant is higher. The pulse width is controlled in accordance with the characteristics described in the foregoing so that laser light of ideal energy density is output for each position.

When the period of the output pulses is made one pulse per pixel, there is a possibility that the thinning out of the laser light may be discernable to the naked eye. Thereupon, it is desirable to make the thinning out of the laser light imperceptible to the naked eye by making a separation into a plurality of pulses per pixel.

When the data for the examination point (5,5) is "0," that pixel is not a printing region, wherefore no pulses are output, and no laser light is output.

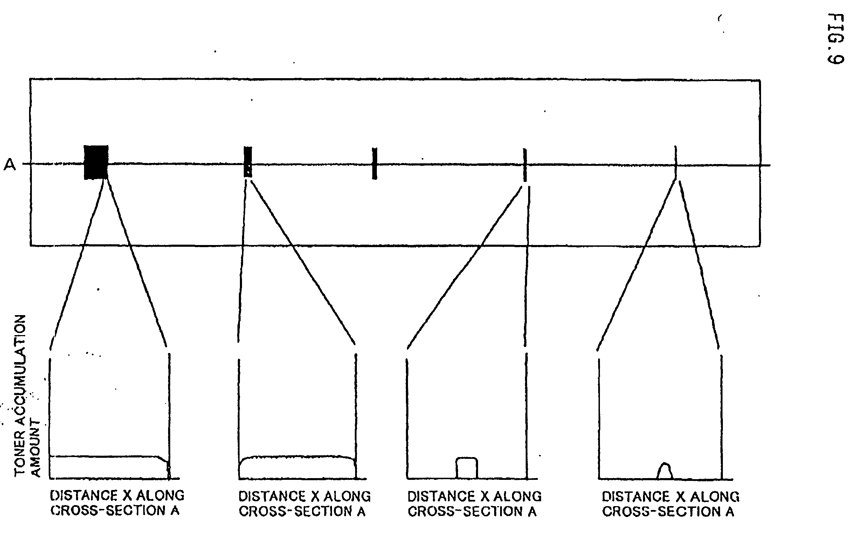

Fig. 9 is a diagram representing toner accumulation amounts in various positions when a printing medium is printed by the printing apparatus according to this embodiment aspect. As is shown in this diagram, the toner adhesion amount at every position inside the printing region is evened out, so that unnecessary toner is not consumed. In particular, even in cases where printing is done in regions of comparably narrow width (3 to 4 dots or so), the amount of toner accumulating no longer becomes excessive. If the printing duty (i.e. the proportion of toner adhesion area relative to the entire paper area) is the same, toner consumption differences will no longer arise due to the shape of the image (that is, according to whether many printing regions of broad width are contained or many printing regions of narrow width are contained).

This embodiment aspect has been described for a laser printer, but this poses no limitation, and the present invention can be applied to a digital copier or other printing apparatus so long as it is one wherein a photosensitive body is irradiated with light, a recording material is made to adhere, and that is transferred to a printing medium.

Based on the present invention, as described in the foregoing, it is possible to conserve the amount of toner used, while maintaining good printing image quality, by insuring that the toner adhesion amount in peripheral regions of the exposed region is made about the same as in other portions, so that a suitable amount of toner adheres. Furthermore, since there is no difference in the toner adhesion amount depending on the broadness or narrowness of the width of the exposed regions, provision can be made so that it is possible to accurately predict how many pages can be printed.

By dividing into a plural number of pulses per pixel, furthermore, provision can be made so that the thinning out of the laser light is not discernible to the naked eye.

## Claims

1. A printing apparatus for causing a recording material to adhere to a printing medium based on image data, said apparatus comprising means arranged for:
sequentially examining each specific pixel in the image data;
calculating data relating to the shortest distance from the specific pixel to a border contour in the image; and
if the specific pixel lies within a predetermined distance from the border contour, performing graduated control of the quantity of the recording material caused to adhere to the printing medium based on how far the specific pixel is within the predetermined distance from the border contour.

2. A printing apparatus according to claim 1, wherein the shortest distance is calculated by hypothetically drawing a straight line perpendicular to the line configuring the boundary contour from the specific pixel and then finding the distance from the specific pixel to the crossing point of the perpendicular line and the boundary contour.

3. A pulse generating unit for generating pulse signals for driving a printing engine on the basis of image data, comprising:
a positional relationship calculation unit for sequentially examining each specific pixel in the image data and calculating data relating to the shortest distance from the specific pixel to a border contour in the image; and
a pulse controller for controlling an on/off ratio of pulse signals on the basis of the data relating to the shortest distance and, if the specific pixel lies within a predetermined distance from the border contour, performing graduated control of the on/off ratio based on how far the specific pixel is within the predetermined distance from the border contour.

4. A pulse generating method for generating pulse signals for driving a printing engine on the basis of image data, comprising:
positional relationship calculation for sequentially examining each specific pixel in the image data and calculating data relating to the shortest distance from the specific pixel to a border contour in the image; and
pulse controlling for controlling an on/off ratio of pulse signals on the basis of the data relating to the shortest distance and, if the specific pixel lies within a predetermined distance from the border contour, performing graduated control of the on/off ratio based on how far the specific pixel is within the predetermined distance from the border contour.

## Patentansprüche

1. Druckvorrichtung zum Bewirken, dass ein Aufzeichnungsmaterial an einem Druckmedium basierend auf Bilddaten anhaftet, wobei die Vorrichtung Mittel umfasst, die ausgebildet sind zum
sequentiellen Überprüfen jedes bestimmten Pixels in den Bilddaten,
Berechnen von Daten betreffend den kürzesten Abstand von dem bestimmten Pixel zu einer Randkontur in dem Bild, und
falls der bestimmte Pixel innerhalb eines vorbestimmten Abstands von der Randkontur liegt, Durchführen einer abgestuften Steuerung der Quantität des Aufzeichnungsmaterials, welches an dem Druckmedium anhaften gelassen wird, basierend darauf, wie weit der bestimmte Pixel innerhalb des vorbestimmten Abstands von der Randkontur liegt.

2. Druckvorrichtung nach Anspruch 1, wobei der kürzeste Abstand berechnet wird durch hypothetisches Ziehen einer geraden Linie orthogonal zu der die Randkontur bildenden Linie von dem bestimmten Pixel und dann Auffinden des Abstands von dem bestimmten Pixel zu dem Schnittpunkt der orthogonalen Linie und der Randkontur.

3. Pulserzeugungseinheit zum Erzeugen von Pulssignalen zum Ansteuern eines Druckwerks auf der Basis von Bilddaten, umfassend:
eine Positionsbeziehungsberechnungseinheit zum sequentiellen Überprüfen jedes bestimmten Pixels in den Bilddaten und Berechnen von Daten betreffend den kürzesten Abstand von dem bestimmten Pixel zu einer Randkontur in dem Bild, und
eine Pulssteuereinrichtung zum Steuern eines Ein/Aus-Verhältnisses von Pulssignalen auf der Basis der Daten betreffend den kürzesten Abstand und, falls der bestimmte Pixel innerhalb eines vorbestimmten Abstands von der Randkontur liegt, Durchführen einer abgestuften Steuerung des Ein/Aus-Verhältnisses basierend darauf, wie weit der bestimmte Pixel innerhalb des vorbestimmten Abstands von der Randkontur liegt.

4. Pulserzeugungsverfahren zum Erzeugen von Pulssignalen zum Ansteuern eines Druckwerks auf der Basis von Bilddaten, umfassend:
eine Positionsbeziehungsberechnung zum sequentiellen Überprüfen jedes bestimmten Pixels in den Bilddaten und ein Berechnen von Daten betreffend den kürzesten Abstand von dem bestimmten Pixel zu einer Randkontur in dem Bild, und
eine Pulssteuerung zum Steuern eines Ein/Aus-Verhältnisses von Pulssignalen auf der Basis der Daten betreffend den kürzesten Abstand und, falls der bestimmte Pixel innerhalb eines vorbestimmten Abstands von der Randkontur liegt, Durchführen einer abgestuften Steuerung des Ein/Aus-Verhältnisses basierend darauf, wie weit der bestimmte Pixel innerhalb des vorbestimmten Abstands von der Randkontur liegt.

## Revendications

1. Dispositif d'impression pour amener un matériau d'enregistrement à adhérer à un support d'impression sur la base de données d'image, ledit dispositif comprenant des moyens agencés pour :
examiner de manière séquentielle chaque pixel spécifique dans les données d'image ;
calculer des données relatives à la distance la plus courte du pixel spécifique jusqu'à un contour de délimitation dans l'image ; et
si le pixel spécifique se trouve à moins d'une distance prédéterminée du contour de délimitation, effectuer une commande progressive de la quantité du matériau d'enregistrement amenée à adhérer au support d'impression sur la base de la distance à laquelle le pixel spécifique se trouve par rapport au contour de délimitation dans la distance prédéterminée.

2. Dispositif selon la revendication 1, dans lequel la distance la plus courte est calculée en dessinant de manière hypothétique une droite perpendiculaire à la ligne configurant le contour de délimitation à partir du pixel spécifique et en trouvant ensuite la distance du pixel spécifique jusqu'au point d'intersection de la droite perpendiculaire et du contour de délimitation.

3. Unité de génération d'impulsions pour générer des signaux à impulsions pour commander un moteur d'impression sur la base de données d'image, comprenant :
une unité de calcul de relation de position pour examiner de manière séquentielle chaque pixel spécifique dans les données d'image et pour calculer des données relatives à la distance la plus courte du pixel spécifique jusqu'au contour de délimitation dans l'image ; et
un contrôleur d'impulsions pour contrôler un rapport tout ou rien des signaux à impulsions sur la base des données relatives à la distance la plus courte et, si le pixel spécifique se trouve à moins d'une distance prédéterminée du contour de délimitation, effectuer une commande progressive du rapport tout ou rien sur la base de l'éloignement du pixel spécifique par rapport au contour de délimitation dans la distance prédéterminée.

4. Procédé de génération d'impulsions pour générer des signaux à impulsions pour commander un moteur d'impression sur la base de données d'image, comprenant :
le calcul d'une relation de position pour examiner de manière séquentielle chaque pixel spécifique dans les données d'image et pour calculer des données relatives à la distance la plus courte du pixel spécifique jusqu'à un contour de délimitation dans l'image ; et
un contrôle d'impulsions pour contrôler un rapport tout ou rien des signaux à impulsions sur la base des données relatives à la distance la plus courte et, si le pixel spécifique sc trouve à moins d'une distance prédéterminée du contour de délimitation, effectuer une commande progressive du rapport tout ou rien sur la base de l'éloignement du pixel spécifique par rapport au contour de délimitation dans la distance prédéterminée.
